(19) Europäisches Patentamt

European Patent Office

Office européen des brevets

(11) Veröffentlichungsnummer: **0 242 684 B1**

(12) ## EUROPÄISCHE PATENTSCHRIFT

(45) Veröffentlichungstag der Patentschrift: **03.06.92**

(21) Anmeldenummer: **87105048.0**

(22) Anmeldetag: **04.04.87**

(51) Int. Cl.⁵: **G01M 3/20**

(54) **Lecksuchgerät mit Detektor und Testleck.**

(30) Priorität: **23.04.86 DE 3613694**

(43) Veröffentlichungstag der Anmeldung:
**28.10.87 Patentblatt 87/44**

(45) Bekanntmachung des Hinweises auf die
Patenterteilung:
**03.06.92 Patentblatt 92/23**

(84) Benannte Vertragsstaaten:
**DE FR GB**

(56) Entgegenhaltungen:
**EP-A- 0 110 004**

**PATENT ABSTRACTS OF JAPAN, Band 5, Nr.
96 (P-67)[768], 23. Juni 1981; & JP-A-56 40 712
(TOKYO SHIBAURA DENKI K.K.) 17-04-1981**

(73) Patentinhaber: **LEYBOLD AKTIENGESELL-
SCHAFT
Bonner Strasse 498
W-5000 Köln 51(DE)**

(72) Erfinder: **Grosse Bley, Werner
Messerschmitt-Strasse 28
W-5300 Bonn 1(DE)**

(74) Vertreter: **Leineweber, Jürgen, Dipl.-Phys.
Nagelschmiedshütte 8
W-5000 Köln 40(DE)**

Rank Xerox (UK) Business Services

## Beschreibung

Die Erfindung bezieht sich auf ein Lecksuchgerät mit einem Detektor, mit einem der Kalibrierung des Detektors dienenden Testleck und mit einem Ventil zwischen dem Detektor und dem Testleck.

Moderne, mit Helium als Testgas arbeitende Leckdetektoren sind in der Lage, Helium-Leckraten bis zu weniger als $10^{-10}$ mbar 1/sec nachzuweisen. Mit Hilfe von Testlecks - vorzugsweise mit eigenem Gasvorrat - erfolgt die Kontrolle und/oder der Abgleich derartiger Lecksuchgeräte. Testlecks stellen praktisch ein Leck mit einer bekannten Leckrate dar. Eine generelle Forderung an Testlecks ist deshalb, daß sie über möglichst lange Zeiten stabile Testgasströme liefern. Weiterhin soll der Testgasstrom möglichst schnell nach dem Beginn eines Kalibriervorganges unverfälscht zur Verfügung stehen.

Die Kalibrierung eines Heliumlecksuchgerätes erfolgt üblicherweise dadurch, daß die bekannte Leckrate des Testlecks mit der Anzeige des Lecksuchgerätes verglichen wird. Aus den beiden Werten wird entweder ein Korrekturfaktor gebildet oder die Anzeige mit einem geeigneten Einstellelement auf den richtigen Wert abgeglichen.

Testlecks können im wesentlichen in zwei Gruppen unterteilt werden. Zur ersten Gruppe gehören Testlecks mit Leckraten größer $10^{-6}$ mbar 1/sec. Diese haben einen relativ hohen Testgasverbrauch, was - bei ständig ausströmendem Testgas - relativ früh zu Druckänderungen führen würde. Mit einer Druckänderung ändert sich auch die Leckrate des Testlecks, so daß es nicht mehr zu Kalibrierzwecken verwendet werden kann. Es ist deshalb bekannt, Testlecks dieses Typs, also für Leckraten größer $10^{-6}$ mbar l/sec, mit einem Absperrventil auszurüsten (DE-OS 32 43 752). Bei Nichtgebrauch des Testlecks ist das Absperrventil verschlossen.

Zur zweiten Gruppe gehören Testlecks, die Leckraten kleiner $10^{-6}$ mbar l/sec liefern und damit zur Kalibrierung hochempfindlicher Lecksuchgeräte geeignet sind. Wegen der sehr kleinen Leckraten liefert ein solches Testleck selbst bei relativ kleinem Gasvorrat über Jahre hinweg einen annähernd konstanten Gasstrom, auch wenn es nicht verschlossen ist. Testlecks dieses Typs weisen deshalb häufig kein Absperrventil auf. Besteht jedoch die Notwendigkeit, den Testgasstrom zu unterbrechen, dann muß auch ein Testleck dieses Typs mit einem Absperrventil ausgerüstet sein. Diese Notwendigkeit besteht z. B. bei einem in ein hochempfindliches Lecksuchgerät eingebautes Testleck, um auch bei angeschlossenem Prüfling oder in automatischen Abläufen jederzeit eine Kalibrierung auslösen zu können.

Bei der Verwendung von Absperrventilen bei Testlecks sind die folgenden Erscheinungen unvermeidbar: Das Absperrventil muß für häufig sehr lange Zeiträume, die zwischen zwei Kalibriervorgängen liegen, verschlossen bleiben. Im Schließzustand des Ventils sammelt sich in dem Raum vor dem Verschlußelement (Totraum) Testgas an. Diese Ansammlung führt dazu, daß nach dem Öffnen des Absperrventils zunächst ein "Testgasschluck" registriert wird, der so groß und dessen Konzentration so hoch sein kann, daß die Gefahr einer Verseuchung und/oder Übersteuerung von Registriergeräten, z. B. des testgasempfindlichen Massenspektrometer-Detektors, besteht. Darüber hinaus ist das Verschlußelement während des Schließzustandes des Ventils dem vollen Testgasdruck (einige bar) ausgesetzt.

Dadurch reichert sich Testgas in dem Verschlußelement, insbesondere in den Dichtwerkstoffen, an. Wird das Ventil zum Zwecke der Einleitung eines Kalibriervorganges geöffnet, dann treten die eingedrungenen Gasteilchen wieder aus und verfälschen für eine relativ lange Zeit den eigentlichen Leckstrom des Testlecks (Drift). Ist das Verschlußelement eine aus Gummi oder Kunststoff bestehende Membran, dann treten die beschriebenen Drifterscheinungen in besonders hohem Maße auf. Darüber hinaus ist bei geschlossenem Ventil - also während des Lecksuchbetriebs - eine Permeation durch die Membran unvermeidbar. Ist das Testleck in einen Lecksucher eingebaut, dann gelangen die durch die Membran hindurchtretenden Teilchen zum testgasempfindlichen Detektor.

Bei dem Testleck nach der DE-OS 32 43 752, das zur ersten Gruppe der Testlecks gehört, also Leckraten größer $10^{-6}$ mbar l/sec liefert, ist ein Totraum vor dem Verschlußstück des Absperrventils nahezu nicht mehr vorhanden. Die nachteiligen Erscheinungen "Testgasschluck", "Drift" und "Permeation" sind dadurch so weit unterdrückt, daß sie vernachlässigbar sind gegenüber der Soll-Leckrate und deshalb die Kalibrierung nicht verfälschen.

Für ein Testleck der zweiten Gruppe, also mit Leckraten kleiner $10^{-6}$ mbar l/sec, ist das Absperrventil nach der DE-OS 32 43 752 nicht mehr einsetzbar, weil die durch die nachteiligen Erscheinungen "Testgasschluck", "Drift" und "Permeation" auftretenden Gasströme im Vergleich zu den Soll-Leckraten nicht mehr vernachlässigbar sind. Um Verfälschungen dieser Art zu vermeiden, ist es bekannt, als absperrbares Testleck für kleine Leckraten ein sogenanntes "gepumptes" Testleck zu verwenden. Der Auslaß eines solchen Testlecks steht über eine Zweigleitung und ein darin angeordnetes Ventil ständig mit dem Eingang des Lecksuchgerätes, in das es eingebaut ist, in Verbindung. Die Zweigleitung mündet in die Hauptleitung, die mit dem auf Lecks zu untersuchenden Prüfling verbunden wird und ebenfalls mit einem Ventil ausgerüstet ist. Während des Normalbetriebs ist das Ventil in der Zweigleitung geschlossen, während das Ventil in der Hauptleitung offen ist. Bei einer Einrichtung dieser Art ist es erforderlich, an den Raum zwischen dem Auslaß des Testlecks und dem Ventil in der Zweigleitung über ein weiteres Ventil eine gesonderte Vakuumpumpe anzuschließen, mit der das ständig aus dem Testleck austretende Testgas abgesaugt wird. Ohne Evakuierung würde sich dieser Raum mit Testgas in hoher Konzentration füllen und damit nicht unmittelbar mit dem zu kalibrierenden Detektor verbunden werden können. Mit der hohen, zu einem unerwünschten "Testgasschluck" führenden Testgaskonzentration wäre die Gefahr einer Verseuchung und/oder Übersteuerung des Massenspektrometerdetektors verbunden. Außerdem würden die bereits beschriebenen Drifterscheinungen eintreten. Zur Kalibrierung wird das Ventil zur Pumpe geschlossen und das Ventil zum Lecksucher hin geöffnet.

Der Aufwand für ein "gepumptes" Testleck ist hoch, zumal eine separate Vakuumpumpe dafür erforderlich ist. Üblicherweise wird man die der Vorevakuierung dienende Hilfspumpe dazu verwenden. Die der Evakuierung des Massenspektrometers dienenden Vakuumpumpen können dazu nicht verwendet werden, da das abgepumpte Helium durch diese Pumpen zurückdiffundieren und die Lecksuche verfälschen würde. Tragbare Lecksucher können wegen des Gewichtes der separaten (zusätzlichen) Vakuumpumpe nicht mit einem "gepumpten" Testleck ausgerüstet werden. Nur in größeren Anlagen, bei denen entweder Kosten und Gewichtsprobleme nicht im Vordergrund stehen oder in denen sich weitere Vakuumpumpen befinden, die das Abpumpen des Testlecks mitübernehmen können, finden "gepumpte" Testlecks Anwendung.

Der vorliegenden Erfindung liegt die Aufgabe zugrunde, ein Lecksuchgerät der eingangs erwähnten Art derart auszubilden, daß es eine Kalibrierung des Detektors erlaubt, bei der ein unerwünschter Testgasschluck und Drifterscheinungen ohne den Aufwand der Verwendung einer separaten Vakuumpumpe vermieden wird.

Erfindungsgemäß wird diese Aufgabe dadurch gelöst, daß in einem Lecksuchgerät der eingangs genannten Art das zwischen Testleck und Detektor befindliche Ventil als 3/2-Wegeventil ausgebildet ist, das den Ausgang des Testlecks entweder mit der Atmosphäre (Lecksuchbetrieb) oder mit dem Eingang des zu kalibrierenden Detektors (Testbetrieb) verbindet und das derart schnell schaltet, daß der durch das Umschalten von Lecksuchbetrieb auf Testbetrieb verursachte Druckanstieg für den zu kalibrierenden Detektor unschädlich bleibt. Vorzugsweise liegen der Ausgang des Testlecks und das 3/2-Wegeventil möglichst nahe beieinander. Dadurch wird der Raum zwischen der Engstelle des Testlecks und dem Ventil möglichst klein, so daß ein zu hoher Druckanstieg nach dem Umschalten vom Lecksuchbetrieb auf den Testbetrieb vermieden ist. Bei ausreichend kleinem Raum und ausreichend schnell schaltendem Ventil kann ohne Verzögerung vom Lecksuchbetrieb auf den Testbetrieb umgeschaltet werden. Die Soll-Leckrate des Testlecks steht unmittelbar nach dem Umschalten unverfälscht zur Verfügung.

Liegen das Testleck und das Ventil nicht nahe beieinander und/ oder schaltet das 3/2-Wegeventil nicht schnell genug, dann ist zweckmäßigerweise vor dem Detektor ein weiteres Ventil vorgesehen, welches den Detektor vor einem kurzzeitigen, schädlichen Druckanstieg schützt. Die Zeit, die notwendig ist, um den "Luftschluck" abzupumpen, beträgt nicht mehr als einige Sekunden. Unmittelbar danach steht die Soll-Leckrate des Testlecks zur Verfügung. Drifterscheinungen oder eine Permeation treten nicht auf.

Der besondere Vorteil der erfindungsgemäßen Vorrichtung liegt darin, daß sie für einen automatisierten, z. B. mikroprozessorgesteuerten Betrieb besonders geeignet ist. Das Testleck läßt sich mit Hilfe des 3/2-Wegeventils elektrisch gesteuert öffnen und schließen. Das Testleck kann gegenüber dem Detektor beliebig lange Zeiten getrennt sein, ohne daß beim Öffnen Abweichungen von der Soll-Leckrate auftreten. Im Vergleich zu einem "gepumpten" Testleck ist die erfindungsgemäße Vorrichtung wesentlich einfacher, da eine separate Vakuumpumpe nicht mehr erforderlich ist. Die gesamte Anordnung ist kompakt und leicht und ist in ein tragbares Lecksuchgerät ohne Beeinträchtigung einbaubar. Auch ältere Lecksuchgeräte können nachträglich mit der erfindungsgmäßen Vorrichtung ausgerüstet werden.

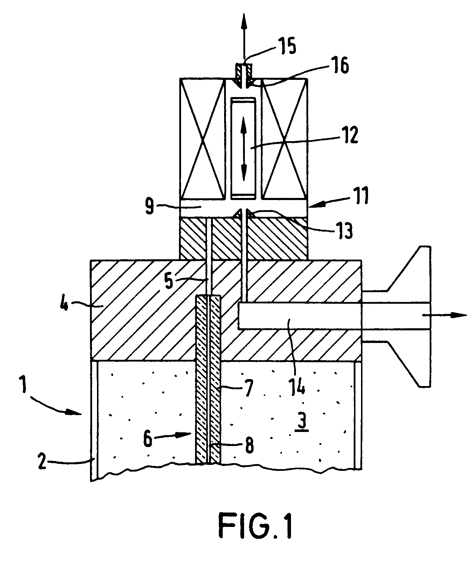

Weitere Vorteile und Einzelheiten der Erfindung sollen anhand von in den Figuren 1 bis 3 dargestellten Ausführungsbeispielen erläutert werden. Es zeigen

Fig. 1
schematisch eine Testleck-Ventil-Kombination für ein Lecksuchgerät nach der Erfindung,
Figuren 2 und 3
Funktionsschemata von Lecksuchgeräten nach der Erfindung.

In Fig. 1 ist das Testleck 1 nur teilweise dargestellt. Es umfaßt das Gehäuse 2 mit dem Heliumvorrat 3. Das Gehäuse 2 ist mit einem Deckel 4 verschlossen, der einen Kanal 5 für das aus dem Heliumvorrat 3 ausströmende Helium aufweist. Mit 6 ist das die Leckrate bestimmende Element bezeichnet. Beispielhaft ist ein zylindrischer Glaskörper 7 mit einer zentralen Kapillaren 8 dargestellt. Als leckbestimmendes Element kann auch ein Diffusionsfinger, eine Membrane oder dergleichen vorhanden sein.

Der Kanal 5 im Deckel 4 mündet unmittelbar in das Gehäuse 9 des 3/2-Wegeventils 11. Dieses umfaßt den Ventilstempel 12. Der in einer Zwischenstellung dargestellte Ventilstempel 12 ist zwischen zwei Endstellungen möglichst schnell umschaltbar. In seiner einen Stellung (Lecksuchbetrieb) liegt er dem Sitz 13 an und verschließt damit den zum Leckdetektor führenden Kanal 14. Der zur Atmosphäre führende Kanal 15 mit dem Sitz 16 ist geöffnet. Das aus der Engstelle 6 ständig austretende Helium strömt in die Atmosphäre. Hohe Testgasdrücke oder Konzentrationen können dadurch innerhalb des Ventilgehäuses 9 nicht auftreten.

In seiner zweiten Stellung liegt der Stempel 12 dem Sitz 16 an und verschließt damit den zur Atmosphäre führenden Kanal 15. Unmittelbar danach steht das aus der Engstelle 6 mit bekannter Leckrate austretende Helium zu Kalibrierzwecken zur Verfügung. Wird der Innenraum des Gehäuses 9 ausreichend klein gehalten und ist die Umschaltbewegung des Stempels 12 ausreichend schnell, dann tritt ein den zu kalibrierenden Detektor gefährdender Luftschluck nicht auf.

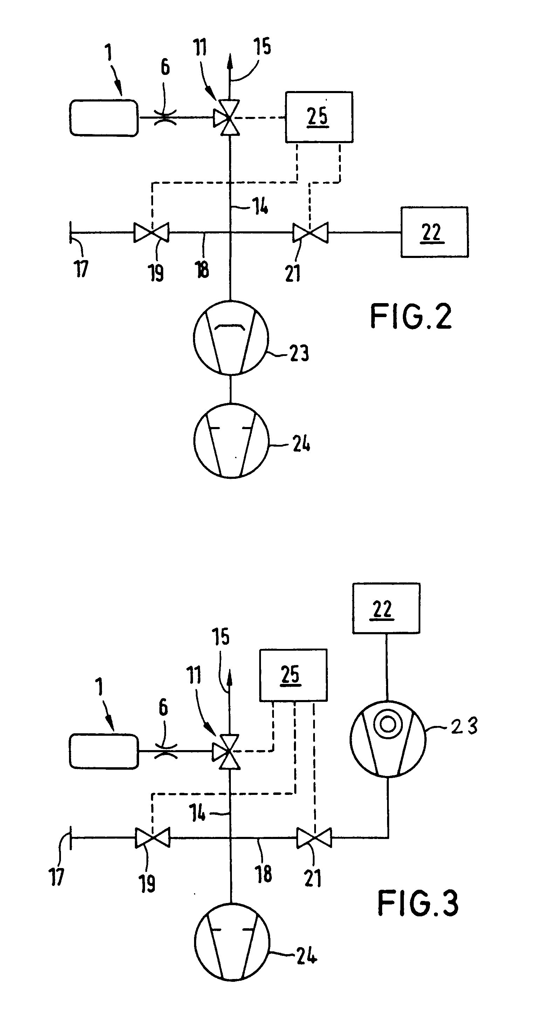

Fig. 2 zeigt das Funktionsschema eines Hauptstromlecksuchers. Mit 17 ist der Anschluß für einen auf Lecks zu untersuchenden Prüfling bezeichnet. Über die Hauptleitung 18 mit den Ventilen 19 und 21 ist der Anschluß 17 mit dem Testgasdetektor 22, vorzugsweise ein Massenspektrometer, verbunden. Zwischen den beiden Ventilen 19 und 21 sind die erfindungsgemäße Vorrichtung mit der Leitung 14 und ein Vakuumpumpsatz angeschlossen. Der Vakuumpumpsatz besteht aus der Hochvakuumpumpe 23, beispielsweise eine Diffusionspumpe, und der Vorvakuumpumpe 24.

Mit 25 ist noch eine Steuereinheit bezeichnet, die über Steuereitungen mit dem 3/2-Wegeventil 11 sowie mit den Ventilen 19 und 21 verbunden ist.

Während des Lecksuchbetriebs sind die Ventile 19 und 21 geöffnet, so daß durch gegebenenfalls vorhandene Lecks im Prüfling dringendes Testgas zum Detektor 22 gelangen kann. Das Testleck 1 ist über das 3/2-Wegeventil 11 mit der zur Atmosphäre führenden Leitung 15 verbunden. Das Umschalten von Lecksuchbetrieb auf Testbetrieb erfolgt in der Weise daß das Ventil 19 geschlossen und das 3/2-Wegeventil derart geschaltet wird, daß das Testleck 1 über die Leitung 14 und die Hauptleitung 18 mit dem Detektor 22 verbunden wird. Sollte das Ventil 11 nicht ausreichend schnell schalten, kann das Ventil 21 vor dem Umschalten auf Testbetrieb geschlossen und nach dem Umschalten für eine kurze Zeit noch geschlossen gehalten werden, damit der den Detektor 22 eventuell gefährdende Luftschluck von den Pumpen 23 und 24 abgesaugt werden kann. Unmittelbar danach steht die Leckrate des Testlecks 1 unverfälscht zur Verfügung.

Fig. 3 zeigt das Funktionsschema eines Gegenstromlecksuchers. Die Hochvakuumpumpe 23, eine Turbomolekular-Vakuumpumpe, liegt in der Leitung 18 und ist dem Massenspektrometer-Detektor 22 unmittelbar vorgelagert. Während des Lecksuchbetriebs sind wieder die Ventile 19 und 21 geöffnet. Das 3/2-Wegeventil verbindet den Ausgang des Testlecks 1 mit der Atmosphäre. Das Umschalten auf Testbetrieb erfolgt in der zu Fig. 2 beschriebenen Weise.

## Patentansprüche

1. Lecksuchgerät mit einem Detektor (22), mit einem der Kalibrierung des Detektors (22) dienenden Testleck (1) und mit einem Ventil (11) zwischen dem Detektor (22) und dem Testleck (1), dadurch gekennzeichnet, daß das Ventil (11) als 3/2-Wegeventil ausgebildet ist, das den Ausgang des Testlecks (1) entweder mit der Atmosphäre - im Leksuchbetrieb - oder mit dem Eingang des zu kalibrierenden Detektors - im Testbetrieb - verbindet und das derart schnell schaltet, daß der durch das Umschalten von Lecksuchbetrieb auf Testbetrieb verursachte Druckanstieg für den zu kalibrierenden Detektor (22) unschädlich bleibt.

2. Lecksuchgerät nach Anspruch 1, dadurch gekennzeichnet, daß das Testleck (1) eine Engstelle (6) aufweist und daß der Ausgang des Testlecks (1) und das 3/2-Wegeventil (11) zur Erzielung eines kleinen Volumens zwischen der Engstelle (6) und dem 3/2-Wegeventil möglichst nahe zueinander angeordnet sind.

3. Lecksuchgerät nach Anspruch 1 oder 2, dadurch gekennzeichnet, daß zwischen dem 3/2-Wegeventil (11) und dem Detektor (22) ein weiteres Ventil (21) angeordnet ist.

## Claims

1. Leak-detecting apparatus with a detector (22), with a test leak (1) for calibrating the detector (22) and with a valve (11) between the detector (22) and the test leak (1), characterised in that the valve (11) is formed as a 3/2-way valve, which connects the outlet of the test leak (1) either to the atmosphere, in leak-detecting mode, or to the inlet of the detector to be calibrated, in test mode, and which switches so quickly that the pressure increase caused by the change from leak-detecting mode to test mode is not harmful to the detector (22) to be calibrated.

2. Leak-detecting apparatus according to claim 1, characterised in that the test leak (1) has a narrowing (6) and in that the outlet of the test leak (1) and the 3/2-way valve (11) are arranged as close as possible to one another in order to achieve a small volume between the narrowing (6) and the 3/2-way valve.

3. Leak-detecting apparatus according to claim 1 or 2, characterised in that a further valve (21) is mounted between the 3/2-way valve (11) and the detector (22).

**Revendications**

1. Appareil de recherche de fuite comportant un détecteur (22), une fuite de test (1) servant au calibrage du détecteur (22), et une vanne (11) entre le détecteur (22) et la fuite de test (1), caractérisé par le fait que la vanne (11) est réalisée en tant que vanne à 3 voies/2 positions, dite " vanne 3/2 ", laquelle relie la sortie de la fuite de test (1) soit à l'atmosphère, ceci en marche de recherche de fuite, soit à l'entrée du détecteur à calibrer, ceci en marche de test, et commute à une vitesse telle que la montée de pression due au passage de la marche en recherche de fuite à la marche de test reste inoffensive pour le détecteur à calibrer (22).

2. Appareil de recherche de fuite selon revendication 1, caractérisé par le fait que la fuite de test (1) présente un rétrécissement (6) et par le fait que la sortie de la fuite de test (1) et la vanne 3/2 (11) sont disposées aussi près que possible l'une de l'autre afin d'obtenir un volume réduit entre le rétrécissement (6) et la vanne 3/2.

3. Appareil de recherche de fuite selon revendication 1 ou 2, caractérisé par le fait qu'une autre vanne (21) est agencée entre la vanne 3/2 (11) et le détecteur (22).

FIG.1

FIG.2

FIG.3